# EUROPÄISCHE PATENTSCHRIFT

(11) **EP 3 908 450 B1**
(45) Veröffentlichungstag und Bekanntmachung des Hinweises auf die Patenterteilung: **13.03.2024**
(21) Anmeldenummer: 20701513.2
(22) Anmeldetag: 07.01.2020
(51) Int. Cl.: B29C 64/118, B29C 64/209, B29C 64/232, B29C 48/25, B29C 64/336, B33Y 30/00

(54) **WERKZEUGEINHEIT**
TOOL UNIT
UNITÉ D'OUTILLAGE

(30) Priorität: 09.01.2019 AT 600072019
(43) Veröffentlichungstag der Anmeldung: 17.11.2021
(73) Patentinhaber: AM Design e.U., 1080 Wien (AT)
(72) Erfinder: SCHREINER, Konrad, 1080 Wien (AT); KORNAUTH, Joachim, 1030 Wien (AT)
(74) Vertreter: Keschmann, Marc
(86) Internationale Anmeldenummer: PCT/IB2020/050075
(87) Internationale Veröffentlichungsnummer: WO 2020/144562

(56) Entgegenhaltungen:
- EP-A1- 3 020 550
- WO-A1-2018/122390
- CN-A- 105 946 233
- CN-A- 107 351 393
- DE-U- 6 938 827
- GB-A- 1 289 985
- JP-A- 2016 210 152
- US-A1- 2010 021 580
- US-A1- 2015 283 751
- US-A1- 2018 250 878

## Beschreibung

Die vorliegende Erfindung betrifft eine Werkzeugeinheit zumindest umfassend einen Werkzeughalter und zumindest ein Werkzeug, wobei der Werkzeughalter zum Halten des Werkzeugs und zum geführten Verschieben des Werkzeugs in einer axialen Richtung aus einer Ruheposition in eine Arbeitsposition und zurück ausgebildet ist, sowie eine 3D-Positionierungseinrichtung mit einer solchen Werkzeugeinheit.

Die vorliegende Erfindung ist vorrangig auf Werkzeugeinheiten im Bereich von 3D-Positionierungseinrichtungen und insbesondere im Bereich von Maschinen zur Durchführung von generativen Fertigungsverfahren gerichtet. Generative Fertigungsverfahren, auch 3D-Druckverfahren genannt, zeichnen sich dadurch aus, dass der Aufbau eines Formkörpers schichtweise erfolgt. Üblicherweise wird wiederholt jeweils zeilen- oder punktweise eine Arbeitsebene abgefahren und ortsselektiv Material ausgebracht und die Arbeitsebene danach nach oben verschoben. Die Schichtdicken liegen je nach Anwendungsfall zwischen 0,025 und 1,25 mm oder darüber. Grundlage für 3D-Druckverfahren sind Computermodelle des zu fertigenden Objekts, welche beispielsweise unter Zuhilfenahme einer CAD-Software generiert werden können. Dabei wird ein Höhenschichtplan des zu fertigenden Objekts erstellt, bei dem für jede Schicht ein Fertigungsraster erzeugt wird, welcher definiert, an welchen Zellen des Rasters ortsselektiv Fertigungsmaterial abgelegt und verfestigt werden soll. Nach demselben Prinzip können jedoch auch Schichten aus einem soliden Block eines Materials ortsselektiv abgetragen werden, wie dies beispielsweise bei CNC-Fräsen geschieht.

Die Erfindung bezieht sich insbesondere auf eine Werkzeugeinheit für 3D-Druckverfahren, das als Fused Deposition Modeling (FDM) oder Fused Filament Fabrication (FFF) bezeichnet wird, bei dem ein Formkörper aus einem schmelzfähigen Kunststoff schichtweise aufgebaut wird. Zu diesem Zweck erfolgt zunächst eine Verflüssigung eines meist drahtförmig von einem Materialvorrat zugeführten Kunststoff- oder Wachsmaterials (Filament) durch Erwärmung sowie nachfolgend die Aufbringung des verflüssigten Materials durch Extrudieren mittels einer Düse und abschließend eine Erhärtung des Materials durch Abkühlung an der gewünschten Position der Arbeitsebene. Die Materialausbringung kann strangförmig oder punktförmig erfolgen.

Für das FDM-Verfahren können derzeit Formwachse und Thermoplaste, wie z.B. Polyethylen, Polypropylen, Polylactid, ABS, PETG und thermoplastische Elastomere eingesetzt werden.

Die Erwärmung und das Extrudieren des Filamentmaterials erfolgt in der Regel mittels eines Druckkopfes, im Zusammenhang mit der vorliegenden Erfindung allgemeiner auch als Werkzeug bezeichnet, welcher auch als "HotEnd" bezeichnet wird. Das Filament wird bei herkömmlichen FDM-Verfahren durch eine beheizte Kammer des Druckkopfes gefördert und dort aufgeschmolzen. Das schmelzflüssige Material wird durch die Düse des Druckkopfes bzw. Werkzeugs mit definiertem Querschnitt gedrückt.

3D-Druckverfahren werden zunehmend komplexer und mittlerweile nicht mehr nur für den Prototypenbau eingesetzt. Vielmehr werden mit derartigen Verfahren auch einsatzfertige Bauteile hergestellt, die als solche mitunter unterschiedlichen mechanischen und thermischen Erfordernissen in unterschiedlichen Bereichen des jeweiligen Bauteils genügen müssen. Aus diesem Grund müssen die Bauteile mit generativen Fertigungsverfahren aus unterschiedlichen Materialien hergestellt werden, die sich hinsichtlich ihrer Farbe, Härte und Schlagzähigkeit, ihrer Temperaturbeständigkeit oder anderer Materialeigenschaften unterscheiden können. Die unterschiedlichen Materialien müssen mit unterschiedlichen Druckköpfen bzw. Werkzeugen aufgebracht werden, da es sonst bei jedem Materialwechsel notwendig wäre, den Druckkopf zu entleeren, zu reinigen und neu zu befüllen bzw. mit dem neuen Material zu beschicken, wofür der jeweilige Druckknopf beispielsweise hinsichtlich der mit dem Druckkopf erreichbaren Aufschmelztemperatur unter Umständen abhängig vom jeweiligen Material gar nicht geeignet sein kann. Es sind daher im Stand der Technik bereits 3D-Positionierungseinrichtungen, insbesondere 3D-Drucker bekannt, die eine Mehrzahl von Druckköpfen bzw. Werkzeugen auf einem Träger aufweisen, die zur Herstellung eines Bauteils oder Werkstücks je nach Bedarf in Betrieb gesetzt werden, um bestimmte Abschnitte oder Bereiche des Werkstücks zu drucken. Zu diesem Zweck wird der jeweils eingesetzte Druckkopf in eine Arbeitsposition gebracht, die gegenüber einer Ruheposition der gerade nicht verwendeten Druckköpfe in axialer Richtung des Druckkopfes vorgeschoben ist. Dies ist notwendig, um zu verhindern, dass die gerade nicht verwendeten Druckköpfe nicht mit der neu aufgebrachten Materialschicht kollidieren und diese beschädigen oder mit dem anderen Material verklebt oder selbst beschädigt werden. Um ein schnelles Verarbeiten unterschiedlicher Materialien zu gewährleisten, ist es im Stand der Technik bereits bekannt, die verschiedenen Druckköpfe bzw. Werkzeuge automatisiert aus der Ruheposition in die Arbeitsposition zu verbringen und dort zu verriegeln.

Beispielsweise ist aus der US 2015/0140147 A1 ein 3D-Drucker mit einer Werkzeugeinheit der eingangs genannten Art bekannt geworden, bei dem eine Mehrzahl von Druckköpfen bzw. Werkzeugen auf einer revolverartigen Werkzeugeinheit angeordnet ist, wobei der jeweils benötigte Druckkopf zuerst durch Drehen eines Werkzeugträgers mit einem Antrieb in Wirkverbindung gebracht und hierauf durch den Antrieb vorgeschoben wird. Die Werkzeugeinheit ist aufgrund der revolverartigen Werkzeugeinheit zum Einen relativ groß in ihren Ausmaßen und gestattet zum Anderen keinen raschen Austausch der Werkzeuge, d.h. Druckköpfe.

Dokument EP 3 020 550 A1 offenbart den Oberbegriff von Anspruch 1.

Der vorliegenden Erfindung liegt daher die Aufgabe zugrunde, eine Werkzeugeinheit der eingangs genannten Art dahingehend zu verbessern, dass zur Realisierung kompakterer 3D-Drucker und ähnlicher 3D-Positionierungseinrichtungen insbesondere mit mehreren Druckköpfen die Werkzeugeinheit kleiner gebaut und ein rascher und einfacher Austausch der Werkzeuge bzw. Druckköpfe oder Arbeitsköpfe ermöglicht wird.

Zur Lösung dieser Aufgabe ist eine Werkzeugeinheit der eingangs genannten Art erfindungsgemäß dadurch gekennzeichnet, dass der Werkzeughalter einen Steuerbereich mit einem Steuerprofil aufweist und ein Steuerbolzen zum Zusammenwirken mit in der axialen Richtung versetzen Bereichen in dem Steuerprofil ausgebildet ist. Das Zusammenwirken eines Steuerbolzens mit einem Steuerprofil mit in der axialen Richtung versetzen Bereichen ermöglicht es mit kleinbauenden Mitteln, eine Verschiebung des Werkzeugs entsprechend der axialen Versetzung der in der axialen Richtung versetzen Bereiche auszuführen, indem der Steuerbolzen im Steuerprofil die in der axialen Richtung versetzen Bereiche abtastet. Gleichzeitig ist ein Steuerbolzen relativ leicht mit dem Steuerbereich in Eingriff bzw. außer Eingriff zu bringen, sodass eine relativ leichte Auswechselbarkeit des Werkzeugs ermöglicht wird.

Gemäß der vorliegenden Erfindung umfasst der Werkzeughalter einen Grundkörper und darauf angeordnet zumindest ein Führungselement zum Verschieben des zumindest einen Werkzeugs im Werkzeughalter, wobei in einer Wandung des zumindest einen Führungselements zumindest eine Steuernut für einen Steuerbolzen am Werkzeug zum Eingriff in die Steuernut ausgebildet ist, die ein entlang der Umfangsrichtung der Wandung verlaufendes Steuerprofil mit zumindest zwei in der axialen Richtung versetzten Bereichen aufweist und wobei im Werkzeughalter ein Antriebsmittel zum Verdrehen des zumindest einen Führungselements im Werkzeughalter vorgesehen ist. Dadurch, dass das Werkzeug in einem Führungselement zum axialen Verschieben des Werkzeugs aufgenommen ist, welches gleichzeitig die Mittel zum Verschieben in Form einer Steuernut aufweist, die mit einem Steuerbolzen am Werkzeug bzw. Druckkopf zusammenwirkt, können die Funktionalitäten der stabilisierenden Führung des Werkzeugs und des Bewirkens der Verschiebung in die Arbeitsposition bzw. in die Ruheposition durch ein einziges Bauteil, nämlich durch das Führungselement bereitgestellt werden. Das Führungselement ist zur Aufnahme des Werkzeugs hohl bzw. im Wesentlichen rohrförmig ausgebildet und ist dadurch in der Lage, ein Werkzeug mit entsprechender Außenkontur sicher gegen Verkippen zu lagern. Wenn das zumindest eine Führungselement durch die Wirkung des Antriebsmittels im Werkzeugträger verdreht wird, sorgen die Steuernuten in der Wandung des Führungselements im Zusammenspiel mit dem Steuerbolzen am Werkzeug, welches drehfest in dem zumindest einen Führungselement aufgenommen ist, aufgrund des entlang der Umfangsrichtung der Wandung verlaufenden Steuerabschnitts mit dem Steuerprofil mit zumindest zwei in der axialen Richtung versetzen Bereichen der Steuernut für ein axiales Vor- und Zurückschieben des Werkzeugs bzw. Druckkopfs im Führungselement. Insgesamt wird auf diese Weise eine feste Lagerung der Werkzeuge gewährleistet, wobei beispielsweise ein Druckkopf eines 3D-Druckers durch das Zusammenwirken des Steuerbolzens mit der Steuernut einfach und automatisiert vor- und zurückgeschoben und in den jeweiligen Positionen verriegelt werden kann.

Wenn die Steuernut einen an einem Rand der Wandung mündenden, axial gerichteten Eintrittsabschnitt für den Steuerbolzen aufweist, wie dies einer bevorzugten Ausführungsform der vorliegenden Erfindung entspricht, kann ein solches Werkzeug in einfacher Weise durch den Eintrittsabschnitt entnommen bzw. eingesetzt werden, wenn das entsprechende Führungselement in einer Verdrehstellung ist, in der der Steuerbolzen axial in den Eintrittsabschnitt der Steuernut eintreten oder aus dem Eintrittsabschnitt austreten kann.

Zum Antrieb des zumindest einen Führungselement zum Verdrehen desselben ist eine Reihe von Möglichkeiten denkbar. Es ist jedoch bevorzugt, dass das Antriebsmittel von einem um das zumindest eine Führungselement umlaufenden Riemen gebildet ist, der in Eingriff mit dem zumindest einen Führungselement steht. Der umlaufende Riemen kann beispielsweise als Keilriemen, bevorzugt jedoch als Zahnriemen ausgebildet sein, der von einem entsprechenden Motor angetrieben ist, wobei die Motoreinheit, die erforderlichenfalls auch mit einem Getriebe versehen sein kann, bevorzugt am Werkzeugträger angebracht ist. Der Riemen verläuft bevorzugt im Inneren des Werkzeugträgers.

Alternativ ist gemäß einer bevorzugten Ausführungsform der vorliegenden Erfindung das Antriebsmittel von einem angetriebenen Zahnrad gebildet, welches mit dem zumindest einen Führungselement verzahnt ist.

Die erfindungsgemäße Werkzeugeinheit ist bereits bei Verwendung mit lediglich einem Werkzeug als platzsparend und effizient zum Verschieben des Werkzeugs anzusehen. Besonders vorteilhaft erweist sich die vorliegende Erfindung jedoch, wenn der Werkzeughalter eine Mehrzahl von Führungselementen, bevorzugt drei Führungselemente, aufweist und das Antriebsmittel zum synchronen Verdrehen der Führungselemente ausgebildet ist, wobei die Mehrzahl der Führungselemente hinsichtlich der in der axialen Richtung versetzen Bereiche der Steuernuten bezüglich des Antriebsmittels in Umfangsrichtung der Führungselemente jeweils versetzt im Werkzeughalter aufgenommen ist. Auf diese Weise werden beim Betätigen des Antriebsmittels, beispielsweise des Riemens, alle Führungselemente im Werkzeughalter gleichzeitig und synchron verdreht, wodurch die Steuerbolzen der Werkzeuge durch die Steuerprofile der Steuernuten betätigt werden. Wenn nun, wie vorgesehen, die Steuerprofile entsprechend versetzt angeordnet sind, d.h., wenn die in der axialen Richtung versetzten Bereiche der Steuerprofile, die im Zusammenspiel mit den Steuerbolzen der Werkzeuge die Arbeits- und Ruhepositionen definieren, in der synchronen Verdrehbewegung so angeordnet sind, dass immer nur ein Werkzeug in der Arbeitsposition ist und die anderen Werkzeuge in der Ruheposition, das heißt in einer zurückgezogenen Position, so können mit der erfindungsgemäßen Vorrichtung lediglich durch Antreiben des Riemens sämtliche Werkzeuge einer erfindungsgemäßen Werkzeugeinheit zum Einnehmen der jeweiligen Arbeits- und Ruhepositionen angetrieben werden. Zusätzlich können für jedes Führungselement bzw. für jedes Werkzeug in einem Führungselement Verdrehpositionen des Riemens programmiert werden, die das Entnehmen eines Werkzeugs aus einer jeweiligen Steuernut durch den Eintrittsabschnitt gestattet.

In diesem Zusammenhang ist es bevorzugt, dass das Antriebsmittel mit einem ersten Führungselement aus der Mehrzahl der Führungselemente in Eingriff steht und dass zumindest ein weiteres Führungselement aus der Mehrzahl der Führungselemente mit dem ersten Führungselement in Eingriff steht. Auf diese Weise treibt das erste Führungselement, dass direkt vom Antriebsmittel, bevorzugt von einem Zahnrad angetrieben ist, die weiteren Führungselemente an, sodass eine synchrone Verdrehbewegung der Mehrzahl der Führungselemente erzielt wird.

Für eine bessere Führung des Werkzeugs in dem zumindest einen Führungselement ist die Erfindung bevorzugt dahingehend weitergebildet, dass drei identische Steuernuten in dem zumindest einen Führungselement, bevorzugt versetzt um jeweils 120°, in Umfangsrichtung des zumindest einen Führungselements angeordnet sind. Dies sorgt für ein gleichmäßiges Aufbringen der Stellkraft um den Umfang eines Werkzeugs, was einem Verkippen und Verklemmen im Führungselement entgegenwirkt.

Eine präzisere Führung des Werkzeugs in dem Führungselement wird dann erzielt, wenn ein federnder Anschlag zwischen dem Werkzeug und dem zumindest einen Führungselement ausgebildet ist, wie dies einer bevorzugten Ausführungsform der vorliegenden Erfindung entspricht. Dies bedeutet, dass das Werkzeug in der Steuernut gegen die obere Kante des Steuerprofils gedrückt wird, sodass ein gewisses Spiel zwischen Steuerbolzen und Steuernut eliminiert wird. Gleichzeitig wird das Werkzeug bei entsprechender Einstellung der Verdrehposition des Führungselements zur Entnahme durch den Eintrittsabschnitt aus dem Steuerprofil gedrückt.

Nach einem nicht in den Ansprüchen enthaltenen Beispiel ist das Steuerprofil als profiliertes Loch am Werkzeugträger ausgebildet und das profilierte Loch mit einem drehbaren profilierten Steuerbolzen an einem Stützelement der Werkzeugeinheit zusammenwirkt. Der Werkzeugträger ist hierbei in der axialen Richtung verschieblich am Stützelement geführt. Diese alternative Art der Realisierung der vorliegenden Erfindung beruht somit darauf, dass ein drehbarer Steuerbolzen, der seinerseits ein Profilierung und somit eine Exzentrizität aufweist, mit einem profilierten Loch zusammenwirkt, dass aufgrund seiner Profilierung ein Steuerprofil bereitstellt. Beim Verdrehen wird das Steuerprofil im Loch von dem Steuerbolzen abgetastet, sodass der gesamte Werkzeugträger gegenüber dem Stützelement der Werkzeugeinheit in der axialen Richtung verschoben wird. Das am Werkzeugträger festgelegte Werkzeug wird somit ebenfalls in der axialen Richtung verschoben.

Bevorzugt weist das Stützelement eine Mehrzahl von Steuerbolzen auf, die von einem Antriebsmittel zum synchronen Verdrehen angetrieben sind, wobei jeweils ein Werkzeugträger mit dem profilierten Loch mit jeweils einem Steuerbolzen zusammenwirkt. Auf diese Weise erfolgt wiederum das synchrone Verschieben der Mehrzahl der Werkzeuge bzw. Druckköpfe in der axialen Richtung in die Arbeitsposition bzw. in die Ruheposition.

Um eventuelle Fertigungstoleranzen ausgleichen zu können, ist der Steuerbolzen entlang seiner Drehachse federnd gelagert.

Dies bedeutet, dass der in das profilierte Loch eingreifende Steuerbolzen den Werkzeugträger mit einer Federkraft beaufschlagt und somit den Werkzeugträger an das Stützelement presst.

Die erfindungsgemäße 3D-Positionierungseinrichtung ist insbesondere als 3D-Drucker ausgebildet und umfasst eine erfindungsgemäße Werkzeugeinheit.

Die Erfindung wird nachfolgend anhand eines in der Zeichnung dargestellten Ausführungsbeispiels näher erläutert. In dieser zeigen
Figur 1 eine perspektivische Darstellung eines Werkzeugs, eines Führungselements und einer Verdrehsicherung für das Werkzeug,
Figur 2 eine perspektivische Darstellung eines Werkzeugträgers mit drei Führungselementen,
Figur 3 eine schematische Darstellung dreier Steuernuten für drei Führungselemente bzw. Werkzeuge,
Figur 4, eine Darstellung eines Antriebsmittels für drei Führungselemente,
Figur 5 eine perspektivische Darstellung eines alternativen Antriebsmittels für drei Führungselemente und
Figur 6 eine perspektivische Darstellung einer alternativen Ausführungsform eines erfindungsgemäßen Werkzeugeinheit.

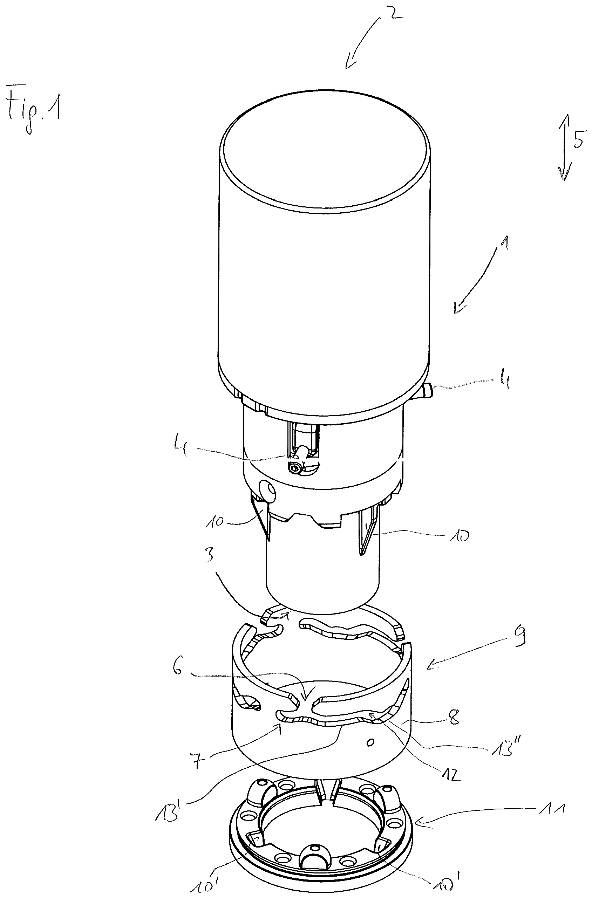

In Fig. 1 ist ein Werkzeug 1 als Arbeitskopf bzw. Druckkopf 1 für einen 3D-Drucker ausgebildet. Dem Druckkopf 1 wird an einem proximalen Ende 2 Filament (nicht dargestellt) zugeführt und das Filament wird im Druckkopf 1 aufgeschmolzen und am distalen Ende 3 ("Hot End") zum Aufbau eines Werkstücks in einem generativen Fertigungsverfahren ortsselektiv abgegeben und verfestigt. Das Werkzeug 1 kann auch als abtragendes Werkzeug beispielsweise einer CNC-Fräse ausgebildet sein, dies ist jedoch in den Figuren nicht dargestellt.

Der Druckkopf 1 weist drei Steuerbolzen 4 auf, die um jeweils 120° versetzt um den Umfang des Druckkopfs 1 verteilt angeordnet sind. Der Druckkopf 1 kann nun in der axialen Richtung, die durch den Doppelpfeil 5 versinnbildlicht ist, unter Einführen der Steuerbolzen 4 in den Eintrittsabschnitt 6 der Steuernut 7 in der Wandung 8 des Führungselements 9 in das Führungselement 9 eintreten. Wenn der Druckkopf 1 in das Führungselement 9 und mit seinen Steuerbolzen 4 in die Steuernut 7 eingesetzt ist, ist er durch die Spanten 10, die mit entsprechenden Ausnehmungen 10' an der Verdrehsicherung 11 zusammenwirken, gegen Verdrehen im Führungselement 9 gesichert, sodass ein Verdrehen des Führungselements 9 durch die Wirkung des Steuerprofils 12 der Steuernut 7 zu einem Verschieben des Druckkopfes 1 bzw. Werkzeugs 1 in der axialen Richtung 5 erfolgt. Dies liegt darin begründet, dass das Steuerprofil 12 in der axialen Richtung versetze Bereiche 13' und 13'' aufweist, die unterschiedlichen axialen Positionen des Werkzeugs 1 im Sinne des Doppelpfeils 5 entsprechen. Durch Verdrehen des Führungselements 9 durchlaufen die Steuerbolzen 4 des Werkzeugs 1 bzw. des Druckkopfes 1 das Steuerprofil 12 und der Druckkopf 1 wird entsprechend den axialen Lagen der unterschiedlichen Bereiche des Steuerprofils 12 vor oder zurück geschoben.

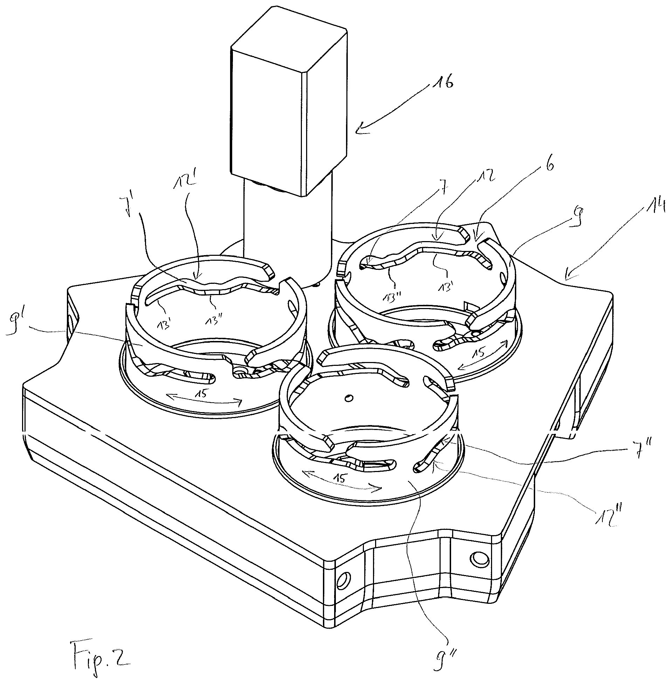

In Fig. 2 ist nun dargestellt, dass die Erfindung in besonders vorteilhafter Weise zum Verschieben mehrerer Werkzeuge bzw. Druckköpfe eingesetzt werden kann. Zu diesem Zweck sind mehrere Führungselemente 9, 9' und 9" in einem gemeinsamen Werkzeugträger 14 angeordnet. Die Führungselemente 9, 9' und 9" weisen voneinander verschiedene Steuerprofile 12, 12' und 12" auf, die hinsichtlich der in der axialen Richtung versetzen Bereiche 13', 13" der Steuernuten 7, 7', 7" bezüglich eines Antriebsmittels, welches im Werkzeughalter 14 aufgenommen ist, in Umfangsrichtung (symbolisiert durch die Doppelpfeile 15) der Führungselemente 9, 9' und 9" jeweils versetzt im Werkzeughalter 14 aufgenommen sind. Die Führungselemente 9, 9' und 9" sind zum gemeinsamen und synchronen Verdrehen vom Antriebsmittel angetrieben und die Steuerprofile 12, 12' und 12" sind so zueinander orientiert, dass abhängig von der jeweiligen Verdrehposition des Antriebsmittels sich immer nur ein Werkzeug (nicht dargestellt in Fig. 2) in einer axial vorgeschobenen Arbeitsposition befindet, während sich die anderen Werkzeuge entweder in einer zurückgeschobenen Ruheposition befinden oder, wenn der oder die Steuerbolzen des Werkzeugs mit den Eintrittsabschnitten 6 fluchten, in einer Entnahmeposition. Mit 16 ist ein Antrieb mit einem Motor und einem Getriebe für das Antriebsmittel bezeichnet.

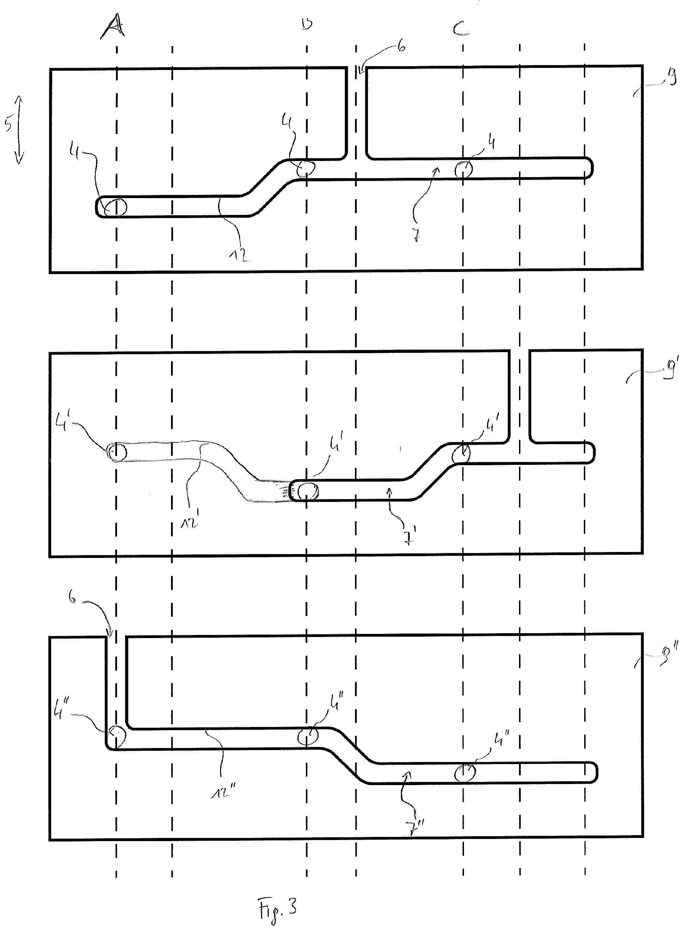

Der soeben beschriebene Umstand ist bei Betrachtung der Fig. 3 besser zu verstehen. In einer ersten Verdrehposition oder Verdrehlage A der Führungselemente 9, 9' und 9" im Werkzeugträger befindet sich der Steuerbolzen 4 eines ersten Druckkopfes in einem axial vorgeschobenen Bereich der Steuernut 7. Der entsprechende Druckkopf befindet sich somit in einer Arbeitsposition. Gleichzeitig befindet sich der Steuerbolzen 4' eines zweiten Druckkopfes in einem axial zurückgeschobenen Bereich der Steuernut 7' und der Steuerbolzen 4" eines dritten Druckkopfes fluchtet mit dem Eintrittsabschnitt 6 des Führungselements 9" und ist dort ebenfalls in einem axial zurückgeschobenen Bereich der Steuernut 7''.

In einer zweiten Verdrehposition oder Verdrehlage B der Führungselemente 9, 9' und 9" im Werkzeugträger befinden sich die Steuerbolzen 4 und 4" des ersten und des dritten Druckkopfes in einem axial zurückgeschobenen Bereich der Steuernuten 7 und 7" und die entsprechenden Druckköpfe somit in einer Ruheposition. Gleichzeitig befindet sich der Steuerbolzen 4' des zweiten Druckkopfes jedoch in einem axial vorgeschobenen Bereich der Steuernut 7' und der Druckkopf somit in einer Arbeitsposition.

In einer dritten Verdrehposition oder Verdrehlage C der Führungselemente 9, 9' und 9" im Werkzeugträger befinden sich die Steuerbolzen 4 und 4' in einem axial zurückgeschobenen Bereich der Steuernuten 7 und 7', die entsprechenden Druckköpfe somit in einer Ruheposition. Gleichzeitig befindet sich der Steuerbolzen 4" des dritten Druckkopfes jedoch in einem axial vorgeschobenen Bereich der Steuernut 7" und der Druckkopf somit in einer Arbeitsposition.

Die weiteren, nicht benannten und mit in der Figur 3 strichlierten Linien dargestellten beispielhaften Verdrehlagen bzw. Verdrehpositionen sind Übergangslagen oder dienen der Entnahme bzw. dem Einsetzen von Druckköpfen. Die Steuernuten 7, 7' und 7" in Figur 3 entsprechen nicht notwendiger Weise jenen, die in den vorangehenden Figuren ersichtlich sind und es sind eine Fülle an verschiedenen Konfigurationen der Steuerprofile 12, 12' und 12" denkbar.

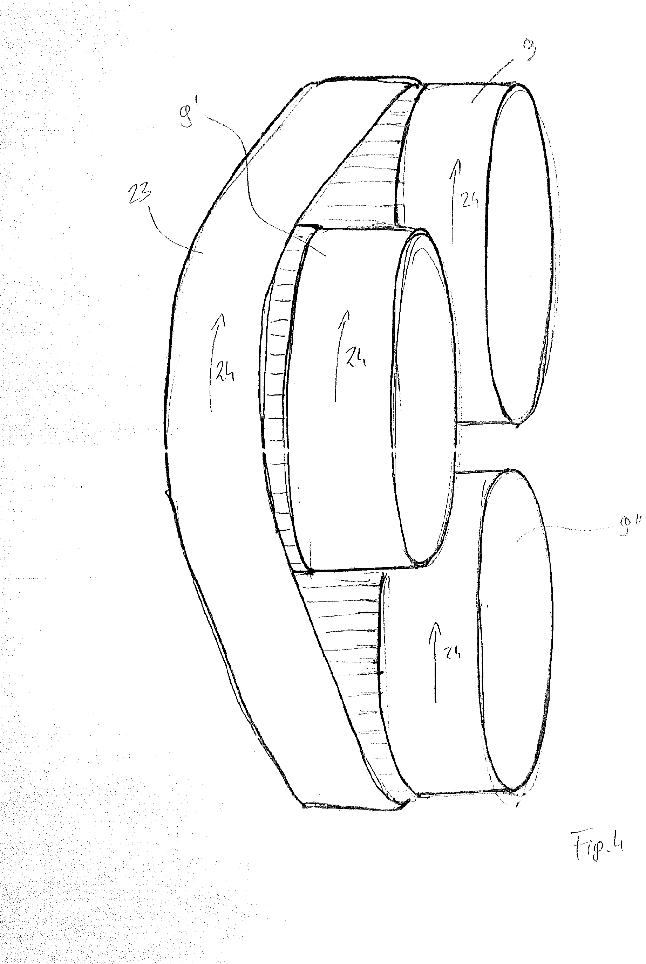

In Fig. 4 ist das Antriebsmittel als Zahnriemen 23 mit nach innen gerichteten Zähnen realisiert. Der Zahnriemen 23 ist mit den Führungselementen 9, 9' und 9" verzahnt, sodass ein Rotation des Zahnriemens im Sinne des Pfeils 24 zu einer gleichsinnigen und synchronen Rotation der Führungselemente 9, 9' und 9" führt, da bei der in Fig. 4 gezeigten Ausführungsform die Führungselemente 9, 9' und 9" nicht direkt miteinander verzahnt, sondern nur über den Zahnriemen 23 miteinander verbunden sind.

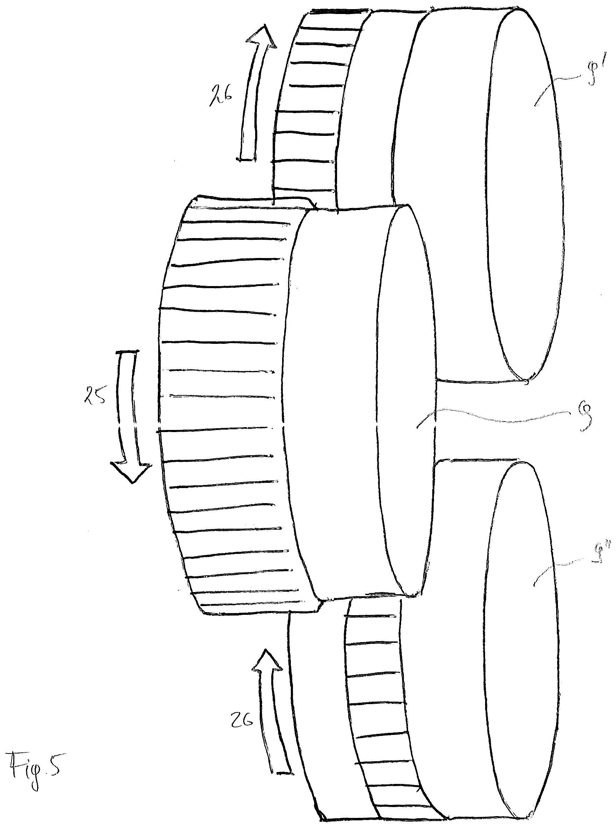

Alternativ kann das Antriebsmittel von einem (nicht dargestellten) angetriebenen Zahnrad gebildet sein, welches mit einem ersten Führungselement 9 in Eingriff steht. Die Fig. 5 betrifft diese Variante und es ist zu erkennen, dass das erste Führungselement 9 wiederum mit den weiteren Führungselementen 9' und 9" in Eingriff steht. Bei Rotation des ersten Führungselements 9 in Richtung des Pfeils 25 führen die weiteren Führungselemente 9' und 9" eine gegensinnige und synchronen Rotation im Sinne der Pfeile 26 aus.

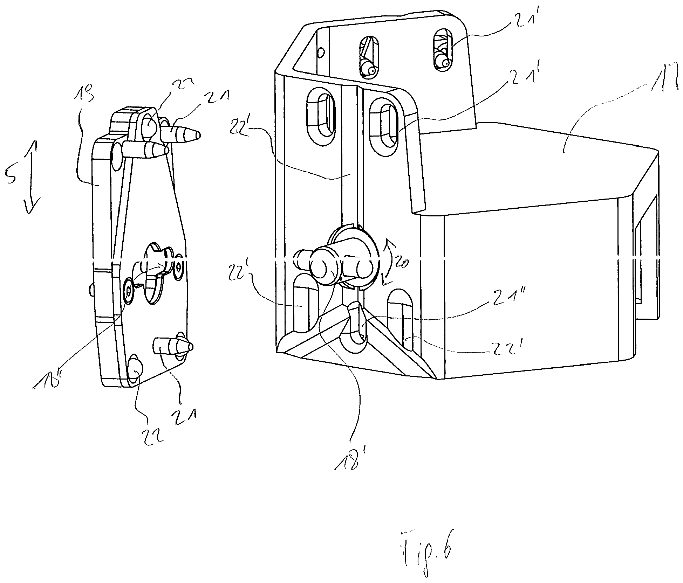

In Fig. 6 ist dargestellt, wie ein Werkzeug, beispielsweise ein Druckkopf an einem Stützelement 17 festgelegt werden kann, um die zu erzielende axiale Bewegung zu erlauben. Ein verdrehbarer Steuerbolzen 18' am Stützelement 17 wirkt mit einem entsprechenden profilierten Loch 18" in einem alternativen Werkzeugträger 19 zusammen. Der Werkzeugträger 19 wird mit dem profilierten Loch 18" über den verdrehbaren Steuerbolzen 18' geschoben. Bei Verdrehen des verdrehbaren Steuerbolzen 18' im Sinne des Doppelpfeils 20 wird das Profil im profilierten Loch 18" von dem exzentrischen Steuerbolzen 18' abgetastet, sodass eine Verschiebung des Werkzeugträgers 19 und somit eines daran befestigten Werkzeugs in Richtung des Doppelpfeils 5 und somit in der axialen Richtung erfolgt. Die Pins 21 greifen in die entsprechenden Langlöcher 21' bzw. in die Nut 21" ein, wodurch eine Beweglichkeit in der axialen Richtung 5 zum Verschieben des Druckkopfs oder allgemein des Werkzeugs gestattet ist. Lagerkugeln 22 drücken gegen entsprechende Nuten 22' und sind in diesen ebenfalls im Sinne des Doppelpfeils 5 verschiebbar.

## Patentansprüche

1. Werkzeugeinheit für 3D-Positionierungseinrichtungen und insbesondere für Maschinen zur Durchführung von generativen Fertigungsverfahren zumindest umfassend einen Werkzeughalter und zumindest ein Werkzeug, wobei der Werkzeughalter zum Halten des Werkzeugs und zum geführten Verschieben des Werkzeugs in einer axialen Richtung aus einer Ruheposition in eine Arbeitsposition und zurück ausgebildet ist, wobei der Werkzeughalter (14) einen Steuerbereich mit einem Steuerprofil (12) aufweist und ein Steuerbolzen (4) zum Zusammenwirken mit in der axialen Richtung (5) versetzen Bereichen (13', 13") in dem Steuerprofil (12) ausgebildet ist, **dadurch gekennzeichnet, dass** der Werkzeughalter (14) einen Grundkörper und darauf angeordnet zumindest ein Führungselement (9, 9', 9") zum Verschieben des zumindest einen Werkzeugs (1) im Werkzeughalter (14) umfasst, wobei das Werkzeug (1) in dem Führungselement (9, 9', 9") zum axialen Verschieben des Werkzeugs (1) aufgenommen ist und wobei in einer Wandung (8) des zumindest einen Führungselements (9, 9', 9") zumindest eine Steuernut (7) für den Steuerbolzen (4) am Werkzeug (1) zum Eingriff in die Steuernut (7) ausgebildet ist, die das entlang der Umfangsrichtung der Wandung (8) verlaufende Steuerprofil (12, 12', 12") aufweist und wobei im Werkzeughalter (14) ein Antriebsmittel zum Verdrehen des zumindest einen Führungselements (9, 9', 9'') im Werkzeughalter (14) vorgesehen ist.

2. Werkzeugeinheit nach Anspruch 1, **dadurch gekennzeichnet, dass** die Steuernut (7) einen an einem Rand der Wandung (8) mündenden, axial gerichteten Eintrittsabschnitt (6) für den Steuerbolzen (4) aufweist.

3. Werkzeugeinheit nach Anspruch 1 oder 2, **dadurch gekennzeichnet, dass** das Antriebsmittel von einem um das zumindest eine Führungselement (9, 9', 9'') umlaufenden Riemen (23) gebildet ist, der in Eingriff mit dem zumindest einen Führungselement (9, 9', 9") steht.

4. Werkzeugeinheit nach Anspruch 1 oder 2, **dadurch gekennzeichnet, dass** das Antriebsmittel von einem angetriebenen Zahnrad gebildet sein, welches mit dem zumindest einen Führungselement (9, 9', 9") verzahnt ist.

5. Werkzeugeinheit nach einem der Ansprüche 1 bis 4, **dadurch gekennzeichnet, dass** der Werkzeughalter (14) eine Mehrzahl von Führungselementen (9, 9', 9"), bevorzugt drei Führungselemente( 9, 9', 9"), aufweist und das Antriebsmittel zum synchronen Verdrehen der Führungselemente (9, 9', 9") ausgebildet ist, wobei die Mehrzahl der Führungselemente (9, 9', 9") hinsichtlich der in der axialen Richtung (5) versetzen Bereiche (13', 13") der Steuernuten (7, 7', 7'') bezüglich des Antriebsmittels in Umfangsrichtung der Führungselemente (9, 9', 9") jeweils versetzt im Werkzeughalter (14) aufgenommen ist.

6. Werkzeugeinheit nach Anspruch 5, **dadurch gekennzeichnet, dass** das Antriebsmittel mit einem ersten Führungselement (9) aus der Mehrzahl der Führungselemente (9, 9', 9") in Eingriff steht und dass zumindest ein weiteres Führungselement (9', 9") aus der Mehrzahl der Führungselemente (9, 9', 9") mit dem ersten Führungselement (9) in Eingriff steht.

7. Werkzeugeinheit nach einem der Ansprüche 1 bis 6, **dadurch gekennzeichnet, dass** drei identische Steuernuten (7. 7', 7") in dem zumindest einen Führungselement (9, 9', 9"), bevorzugt versetzt um jeweils 120°, in Umfangsrichtung des zumindest einen Führungselements (9, 9', 9") angeordnet sind.

8. Werkzeugeinheit nach einem der Ansprüche 1 bis 7, **dadurch gekennzeichnet, dass** ein federnder Anschlag zwischen dem Werkzeug (1) und dem zumindest einen Führungselement (9, 9', 9'') ausgebildet ist.

9. 3D-Positionierungseinrichtung, insbesondere 3D-Drucker, umfassend eine Werkzeugeinheit nach einem der Ansprüche 1 bis 8.

## Claims

1. Tool unit for 3D-positioning devices and in particular for machines for carrying out additive manufacturing processes at least comprising a tool holder and at least one tool, the tool holder being designed for holding the tool and for guided displacement of the tool in an axial direction from a rest position to a working position and back, wherein the tool holder (14) comprises a control region with a control profile (12), and wherein a control pin (4) is designed to interact with regions (13', 13") offset in the axial direction (5) in the control profile (12), **characterized in that** the tool holder (14) comprises a base body and at least one guide element (9, 9', 9") arranged thereon for moving the at least one tool (1) in the tool holder (14), wherein the tool (1) is received within the guide element (9, 9', 9") for axial displacement of the tool (1), wherein in a wall (8) of the at least one guide element (9, 9', 9") at least one control groove (7) for the control pin (4) on the tool (1) for engagement in the control groove (7) is formed, the control groove (7) comprising the control profile (12, 12', 12") running along a circumferential direction of the wall (8), and wherein a drive means is provided in the tool holder (14) for rotating the at least one guide element (9, 9', 9") in the tool holder (14).

2. Tool unit according to claim 1, **characterized in that** the control groove (7) comprises an axially directed inlet section (6) for the control pin (4), wherein said inlet section (6) opens at an edge of the wall (8).

3. Tool unit according to claim 1 or 2, **characterized in that** the drive means is formed by a belt (23) which runs around the at least one guide element (9, 9', 9") and which engages with the at least one guide element (9, 9', 9").

4. Tool unit according to claim 1 or 2, **characterized in that** the drive means is formed by a driven gearwheel which is toothed with the at least one guide element (9, 9', 9").

5. The tool unit according to any one of claims 1 to 4, **characterized in that** the tool holder (14) comprises a plurality of guide elements (9, 9', 9"), preferably three guide elements (9, 9', 9") and that the drive means is designed for synchronously rotating the guide elements (9, 9', 9"), wherein the plurality of guide elements (9, 9', 9") with respect to the regions (13', 13") of the control grooves (7, 7', 7") that are offset in the axial direction (5) relative to the drive means is received in the tool holder (14) each offset in the circumferential direction of the guide elements (9, 9', 9").

6. The tool unit according to claim 5, **characterized in that** the drive means is in engagement with a first guide element (9) of the plurality of guide elements (9, 9', 9") and that at least one further guide element (9', 9") of the plurality of guide elements (9, 9', 9") is in engagement with the first guide element (9).

7. The tool unit according to any one of claims 1 to 6, **characterized in that** three identical control grooves (7, 7', 7") are arranged in the at least one guide element (9, 9', 9"), preferably offset by 120° each, in a circumferential direction of the at least one guide element (9, 9', 9").

8. The tool unit according to any one of claims 1 to 7, **characterized in that** a resilient stop is formed between the tool (1) and the at least one guide element (9, 9', 9").

9. 3D positioning device, in particular 3D printer, comprising a tool unit according to any one of Claims 1 to 8.

## Revendications

1. Unité outil pour dispositifs de positionnement 3D et en particulier pour des machines destinées à effectuer des procédés de fabrication générative, comprenant au moins un porte-outil et au moins un outil, le porte-outil le porte-outil étant conçu pour maintenir l'outil et pour déplacer l'outil de façon guidée dans une direction axiale d'une position de repos à une position de travail et vice versa, dans laquelle le porte-outil (14) présente une zone de commande ayant un profil de commande (12), un goujon de commande (4) étant conçu pour coopérer avec des zones (13', 13") décalées dans la direction axiale (5) dans le profil de commande (12), **caractérisée en ce que** le porte-outil (14) comprend un corps de base et au moins un élément de guidage (9, 9', 9") disposé sur celuici pour déplacer ledit au moins un outil (1) dans le porte-outil (14), l'outil (1) étant logé dans l'élément de guidage (9, 9', 9") pour le déplacement axial de l'outil (1), et au moins une rainure de commande (7) étant formée dans une paroi (8) dudit au moins un élément de guidage (9, 9', 9") pour que le goujon de commande (4) sur l'outil (1) s'engage dans la rainure de commande (7), qui présente le profil de commande (12, 12', 12") s'étendant le long de la direction circonférentielle de la paroi (8), et dans laquelle un moyen d'entraînement pour faire tourner ledit au moins un élément de guidage (9, 9', 9") dans le porte-outil (14) est prévu dans le porte-outil (14).

2. Unité outil selon la revendication 1, **caractérisée en ce que** la rainure de commande (7) présente une section d'entrée (6) axialement dirigée pour le goujon de commande (4) qui s'ouvre sur un bord de la paroi (8).

3. Unité outil selon la revendication 1 ou 2, **caractérisée en ce que** le moyen d'entraînement est formé par une courroie (23) qui entoure ledit au moins un élément de guidage (9, 9', 9"), et qui s'engage avec ledit au moins un élément de guidage (9, 9', 9").

4. Unité outil selon la revendication 1 ou 2, **caractérisée en ce que** le moyen d'entraînement est formé par une roue dentée entraînée, qui est enclenchée avec ledit au moins un élément de guidage (9, 9', 9").

5. Unité outil selon l'une des revendications 1 à 4, **caractérisée en ce que** le porte-outil (14) présente une pluralité d'éléments de guidage (9, 9', 9"), de préférence trois éléments de guidage (9, 9', 9"), et **en ce que** le moyen d'entraînement est conçu pour faire tourner synchroniquement les éléments de guidage (9, 9', 9"), la pluralité des éléments de guidage (9, 9', 9") étant logée dans le porte-outil (14) avec un décalage respectif par rapport au moyen d'entraînement, dans la direction circonférentielle des éléments de guidage (9, 9', 9"), des zones (13', 13") des rainures de commande (7, 7', 7") décalées dans la direction axiale (5).

6. Unité outil selon la revendication 5, **caractérisée en ce que** le moyen d'entraînement s'engage avec un premier élément de guidage (9) parmi la pluralité des éléments de guidage (9, 9', 9") et **en ce qu'**au moins un autre élément de guidage (9', 9") parmi la pluralité des éléments de guidage (9, 9', 9") s'engage avec le premier élément de guidage (9).

7. Unité outil selon l'une des revendications 1 à 6, **caractérisée en ce que** trois rainures de commande (7. 7', 7") identiques sont disposées dans ledit au moins un élément de guidage (9, 9', 9"), de préférence chacune décalée de 120° dans la direction circonférentielle dudit au moins un élément de guidage (9, 9', 9").

8. Unité outil selon l'une des revendications 1 à 7, **caractérisée en ce qu'**une butée élastique est formée entre l'outil (1) et ledit au moins un élément de guidage (9, 9', 9").

9. Dispositif de positionnement 3D, notamment imprimante 3D, comprenant une unité outil selon l'une des revendications 1 à 8.
